Europäisches Patentamt

European Patent Office

Office européen des brevets

(19)

(11) Publication number: **0 170 942**
A2

## (12) EUROPEAN PATENT APPLICATION

(21) Application number: **85108855.9**

(22) Date of filing: **16.07.85**

(51) Int. Cl.⁴: **G 21 C 17/00**, G 01 M 3/38, G 01 N 23/18

(30) Priority: **06.08.84 US 638330**

(43) Date of publication of application: **12.02.86**
Bulletin 86/7

(84) Designated Contracting States: **BE CH DE FR GB IT LI SE**

(71) Applicant: **WESTINGHOUSE ELECTRIC CORPORATION, Westinghouse Building Gateway Center, Pittsburgh Pennsylvania 15222 (US)**

(72) Inventor: **Klinvex, Daniel Edward, 2009 Monongahela Boulevard, McKeesport Pennsylvania 15132 (US)**
Inventor: **Adamonis, Donald Charles, 679 Regency Drive, Pittsburgh Pennsylvania 15239 (US)**
Inventor: **Lutz, Rodney Alan, RD No. 1 Box 226B, Jeannette Pennsylvania 15644 (US)**

(74) Representative: **Patentanwälte Dipl.-Ing. R. Holzer Dipl.-Ing. (FH) W. Gallo, Philippine-Welser-Strasse 14, D-8900 Augsburg (DE)**

(54) Inflatable radiological inspection tool for nuclear reactors.

(57) An inflatable radiological underwater inspection tool for nuclear reactors, and in particular, for the radiological inspection of reactor vessel nozzle to safe-end welds. The tool is constructed of a water-tight housing and an inflatable bladder to be used in displacing reactor coolant from the operating vicinity of the radiation path of a panoramic iridium source. With the inspection tool properly centered within the reactor vessel nozzle and with radiographic plates fastened around the outside diameter of the nozzle to safe-end weld, the bladder is pressurized and the iridium source is dispensed to the housing from a remote shielded location. After exposure, the radiographic plates, in the nature of film cassettes, are removed and interpreted for detecting defects in the weld volume.

1
## INFLATABLE RADIOLOGICAL INSPECTION
## TOOL FOR NUCLEAR REACTORS

### BACKGROUND OF THE INVENTION

The present invention relates in general to a radiological inspection tool, and more particularly, to an inflatable radiological underwater inspection tool for detecting defects in nuclear reactor components, for example, in weld fillets of reactor vessel nozzles, while being maintained in an underwater radioactive environment.

Commercial nuclear reactor vessels used in the generation of electrical power are usually of the pressurized water or boiling water type. In either case, the reactor vessel is generally constructed of a cylindrical metallic shell having a plurality of circumferentially-spaced nozzles extending through the shell wall and welded thereto. These nozzles are of various types and are often referred to as safety injection nozzles, outlet nozzles and inlet nozzles. Thus, it can be appreciated that numerous welds are required in the fabrication of the reactor vessel, such as in securing the various nozzles to the shell wall. Although the weld areas of the reactor vessel are, of course, inspected prior to the reactor vessel's initial use, because of possible in-service deterioration, government regulations mandate in-service inspection of these reactor vessel welds.

Under such regulations, it is required that the vessel weld areas be subjected to periodic volumetric examination, whereby the structural integrity of the weld is monitored. Due to the nature of such an in-service inspection, the device designed to accomplish the specific weld examinations of the numerous nozzles must be capable of successfully operating in an underwater radioactive environment and under remote control for maintaining a high degree of control over the placement and movement of the inspection tool. It has been known to use ultrasonic techniques for inspecting the numerous welds of the reactor vessel using the so-called space-type testing. However, the ability of ultrasonic techniques for detecting defects of significance in, for example, reactor vessel nozzle to safe-end welds, has been found to be less than satisfactory due to, in part, its thick-walled, bimetallic nature.

It has therefore been found desirable to inspect the nozzle to safe-end welds using underwater radiographic examination. Normally, however, underwater radiography is not feasible due to source scattering and strength diminishing. One solution to this problem has been proposed in British Patent Specification No. 1,085,961 which discloses an underwater radiological inspection tool specifically for prototype fuel elements. The prior art tool is constructed of a movable water-tight housing containing an X-ray transmitter and an opposing television or photographic camera. The housing is provided with an indented portion between the X-ray transmitter and camera in order to receive a portion of the prototype fuel element being radiologically inspected. In order to overcome the problem of source scattering and strength diminishing, the prior art has provided a pair of inflatable pockets within the indented portion to displace when inflated, that water which is located along the radiation path between the X-ray transmitter and the camera. In this manner, the pockets are inflated about that portion of the prototype fuel element being inspected. Although the prior art has been found to overcome these source scattering and strength diminishing problems when inspecting prototype fuel elements, such prior art device has been found less than satisfactory for use in the radiological inspection of the various components of a nuclear reactor, specifically, the nozzle to safe-end welds.

Specifically, the prior art tool cannot be placed internally of that portion of the nuclear reactor component being inspected, such tool being merely adaptable to being positioned externally of the component. Thus, components of a nuclear reactor, for example, nozzle to safe-end welds, which require that the source be placed inside the component with the film on the outside surface because of the presence of water, cannot be radiologically inspected using the prior art tool. In addition, the relatively large size of the housing, due to its confining of the X-ray transmitter and both television and photographic cameras, prevent the tool from being sufficiently mobile so as to possess the necessary versatility for use in the radiological inspection of nuclear reactor components.

In addition to the foregoing, it is generally known that X-ray transmitters of the type disclosed in the prior art are of relatively low strength. These transmitters are therefore incapable of generating the required X-ray strength necessary for the radiological inspection of thick-walled nuclear reactor components, specifically, nozzle to safe-end welds. The use of a stronger source of radioactive emission presents its own unique problems. In this regard, a source suitable for the radiological inspection of various nuclear reactor components is extremely hazardous to the operator and must therefore be maintained in an underwater environment or within a suitable protective, shielded container. Such a source would not be suitable for use with the prior art tool, as such tool must permit access by an operator to retrieve the exposed film from the photographic camera. This operation is typically carried out when the tool is removed from its shielded underwater location, thereby exposing the operator to dangerous radiation.

0170942

It can, therefore, be appreciated that there is an unsolved need for an inflatable radiological inspection tool for the underwater inspection of nuclear reactor components, and which tool, permits access to the interior of these components to be inspected, for example, nozzle to safe-end welds, as well as providing a radiation source which may be stored remotely from the inspection tool to prevent operator exposure to radiation upon removal of the tool from its shielded underwater environment when not in use for inspection, repair, storage and the like.

## SUMMARY OF THE INVENTION

The present invention provides an inflatable radiological inspection tool for nuclear reactors, and in particular, one which overcomes or avoids one or more of the foregoing disadvantages resulting from the use of the above-mentioned prior art tool, and which fulfills the specific requirements of such a tool in the manner as set forth in accordance with the present invention. Specifically, it is within the contemplation of the present invention to provide an inflatable radiological inspection tool for nuclear reactors which is constructed and arranged to permit its insertion within an interior portion of the nuclear reactor component being inspected, being capable of displacing water located along the radiation path between the tool and that portion of the object being inspected so as to avoid source scattering and strength diminishing, as well as being designed to permit the transfer of the radiation source from the tool to a remote location for safe shielded storage.

Another object of the present invention is to provide an inflatable radiological inspection tool for nuclear reactors which may be manipulated in an underwater radioactive environment from a remote location, which is specifically adapted for the radiological inspection of reactor vessel nozzle to safe-end welds.

The invention in its broad form comprises a tool for the radiological inspection of objects in an underwater environment in use, said tool comprising a housing, a portable radiation source for emitting radiation along a radiation path in use between said housing and said object, transfer means for transferring said radiation source between said housing and a remote location, inflatable means attached to said housing and inflatable from a first to a second position, said inflatable means permitting relative movement between said housing and said object when in said first position and displacing water located along said radiation path when in said second position, and control means for controlling the inflation of said inflatable means from said first to said second position.

In accordance with one embodiment of the present invention, there is provided a tool for the radiological inspection of objects in an underwater environment. The tool is constructed of a housing, a radiation source for emitting radiation along a radiation path between the housing and the object, transfer means for transferring the radiation source between the housing and a remote location, inflation means attached to the housing and inflatable from a first to a second position, the inflation means permitting relative movement between the housing and the object when in the first position, and displacing water located along the radiation path when in the second position, and control means for controlling the inflation of the inflation means from the first to the second position.

In accordance with another embodiment of the present invention, the tool is constructed of a housing constructed to be positioned within a portion of the object to be inspected, a radiation source within the housing for emitting radiation along a radiation path between the housing and the portion of the object, inflation means attached to the housing and inflatable from a first to a second position, the inflation means permitting movement of the housing within the portion of the object when in the first position and displacing water located between the housing and the portion of the object when in the second position, and control means for controlling the inflation of the inflation means from the first to the second position.

<h2 style="text-align:center">BRIEF DESCRIPTION OF THE DRAWINGS</h2>

The invention will be more fully understood by reference to the following detailed description of a presently preferred exemplary embodiment, of an inflatable radiological inspection tool for nuclear reactors when taken in conjunction with the accompanying drawings, wherein:

Fig. 1 is a front elevational view in partial cross-section showing the inflatable radiological inspection tool in accordance with the present invention being utilized for the inspection of a reactor vessel nozzle to safe-end weld; and

Fig. 2 is a front elevational view in partial cross-section showing in greater detail the construction of the inflatable radiological inspection tool of the present invention.

<h2 style="text-align:center">DETAILED DESCRIPTION</h2>

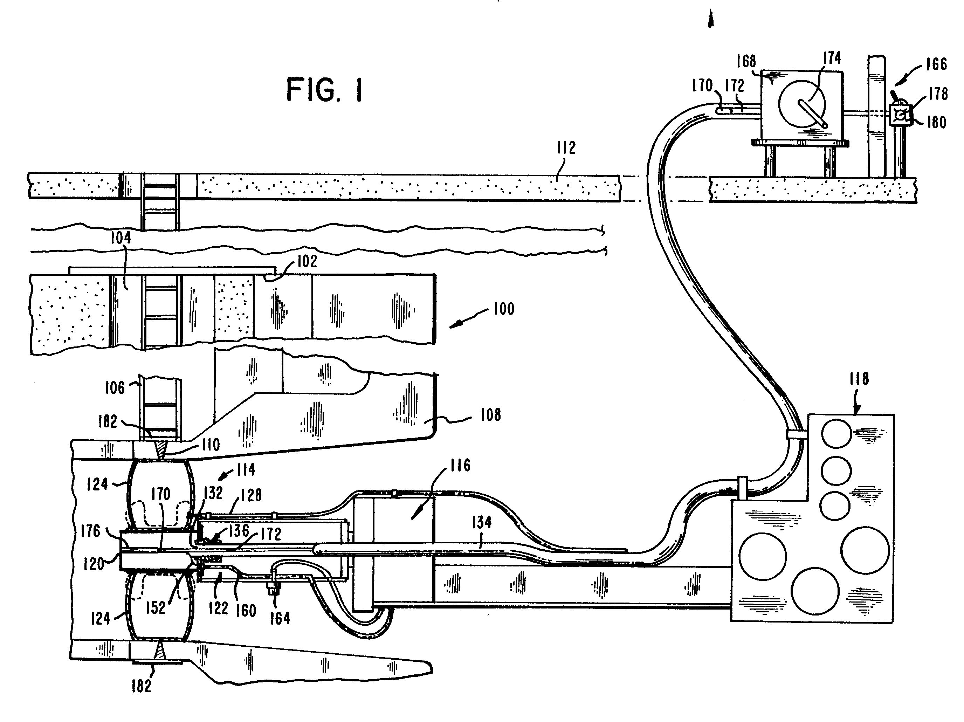

Referring to the drawings, wherein like reference numerals represent like elements, there is shown in Fig. 1 a portion of a nuclear reactor generally designated by the reference numeral 100. That portion of the nuclear reactor 100 shown generally includes a reactor vessel cavity floor 102, a reactor vessel nozzle manway 104, a ladder 106 extending into the nozzle manway, a reactor vessel nozzle 108, a reactor vessel nozzle to safe-end weld 110 to be inspected, and a reactor vessel operating deck 112. Movably positioned within the reactor vessel nozzle 108, there is shown an inflatable radiological inspection tool 114 in accordance with the present invention.

The inspection tool 114 is attached to the B axis arm 116 of a Westinghouse Reactor Vessel In-Service Inspection Tool 118. The in-service inspection tool 118 is a 9-axis robot which permits the manipulation of an attached tool in an underwater radioactive environment from a remote location. The inspection tool 114 of the present invention is specifically attached to the B axis arm, which permits manipulation along vertical, horizontal and rotational axes.

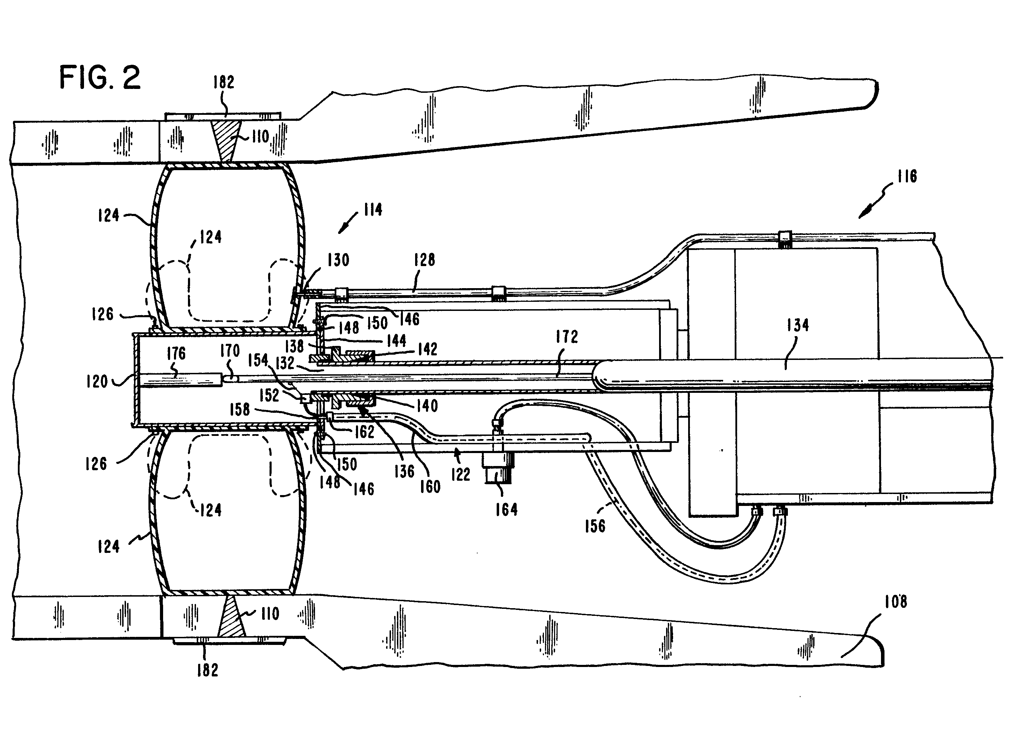

Referring now to Fig. 2, a detailed description of the inflatable radiological inspection tool 114 of the present invention will now be described. As shown, the inspection tool 114 is constructed of a water-tight housing 120 of generally rectangular construction attached to the B axis arm 116 of the in-service inspection tool 118 by means of a support member 122. An annular-shaped inflatable bladder 124 is attached peripherally about the housing 120 by means of a clamp 126. The bladder 124 can be formed of any suitable resilient material, such as rubber based materials, which permits its inflation as shown by the solid lines and deflation as shown by the phantom lines. The inflation and deflation of the bladder 124 is controlled by a regulated air supply line 128 connected to the bladder by means of a fitting 130 and to a remote source of compressed air (not shown). One wall of the housing 120 is provided with a central opening 132, which receives a hollow transfer conduit 134 extending from the housing to a remote location, i.e., operating deck 112, as to be described. The transfer conduit 134 is attached to the housing 120 in fluid type connection by means of a water-tight connector 136. The connector 136 is generally constructed of a flanged member 138 providing a circumscribing opening about the exterior of the transfer conduit 134 for receiving packing material 140 which is compressed to provide a water-tight seal by means of a U-shaped cap 142 secured about the flanged member.

The connector 136 is attached to a cover plate 144 for the housing 120 which permits access to the interior thereof as may be required for repair or inspection. In this regard, the housing 120 is provided with a peripheral flange 146 underlying a peripheral portion of the cover plate 144. Sandwiched between the flange 146 and cover plate 144 is provided an O-ring 148, typically held in position by means of a groove (not shown). The cover plate 144 and flange 146 are removably secured together by means of a plurality of peripheral bolts 150.

A microswitch 152 is mounted to the inside of the cover plate 144 and extends internally into the housing 120. A microswitch lever 154 extends from the microswitch 152 and is arranged to terminate overlying a central portion of the opening 132 to which the transfer conduit 134 is attached. The microswitch electrical leads 156 extend through an opening 158 within the cover plate 144 and within an air supply line 160 attached to the opening 158 of the cover plate by means of a connector 162. The air supply line 160 supplies a source of air or other inert gas in order to maintain a positive pressure within the housing 120. In this manner, an internal positive pressure maintained within the housing 120 prevents seepage of water into the housing in the event of failure of the seal created by the O-ring 148 between the cover plate 144 and flange 146. An immersion type ultrasonic transducer 164 is attached to the support member 122 to center the inspection tool 114 within the reactor vessel nozzle 108 through manipulation of the B axis arm 116 of the in-service inspection tool 118.

The transfer conduit 134 extends from the housing 120 to a remote location generally designated by reference numeral 166, for example, at the reactor vessel operating deck 112. The transfer conduit 134 is connected to a source of radioactive material such as a lead storage container 168 commonly referred to as a Pig. The radioactive material, in accordance with one embodiment of the present invention, comprises an iridium source 170. However, other forms of radioactive material may also be used in accordance with the present invention. The iridium source 170 is maintained within the storage container 160 and attached to the end of a wind-up cable 172. In this manner, the iridium source 170 may be transferred from the storage container 168 through the transfer conduit 130 and into the housing 120 by the cable 172 using a cable winding mechanism 174. The alignment of the iridium source 170 within the housing 120 is controlled by a rod-shaped stop member 176 provided within the housing and affixed to one wall thereof. The presence of the iridium source 170 within the housing 120 is indicated by an indicating light 178 provided on a cable winding mechanism control unit 180 arranged adjacent the storage container 168.

The inflatable radiological inspection tool 114 of the present invention provides for the capability of underwater radiographic examination of reactor vessel nozzle to safe-end welds, and which overcomes the problems of radiation source scattering and strength diminishing. In use, radiographic film cassettes 182 are fastened around the outside diameter of the reactor vessel nozzle to safe-end welds 110. Access to the peripheral portion of the reactor vessel nozzle to safe-end weld 110 is obtained through the nozzle manway 104, which is located in the reactor vessel cavity 142. The inspection tool 114, having the annular-shaped bladder 124 initially provided in a deflated condition as illustrated by the phantom lines, is manipulated by the B axis arm 116 of the in-service inspection tool 118 into an interior portion of the reactor vessel nozzle 108. The inspection tool 114 is manipulated within the reactor vessel nozzle 108 until the end of the stop member 176 is arranged in alignment with the reactor vessel nozzle to safe-end weld 110. The inspection tool 114 is centered within the reactor vessel nozzle 108 by means of the ultrasonic transducer 164. The transducer 164 is adapted to transmit and receive ultrasonic pulses to and from the internal surface of the reactor vessel nozzle 108 for determining the distance therefrom while manipulating the inspection tool 114 until it becomes centered within the nozzle.

Once the inspection tool 114 has been manipulated into its proper position within the reactor vessel nozzle 108, the annular-shaped bladder 124 is inflated by means of compressed air from the regulated air supply line 128. The inflation of the bladder 124 displaces reactor coolant, e.g., water, from the region between the housing 120 and the reactor vessel nozzle to safe-end weld 110 to be radiologically inspected, i.e., along the radiation path of the inspection tool 114. During use of the inspection tool 114, a constant purge of air, or other inert gas, is fed internally of the housing 120 via air supply line 160 to maintain a slight positive internal pressure to prevent the possibility of coolant leakage past the O-ring 148 and into the housing.

The iridium source 170 attached to the cable 172 is dispensed via the cable winding mechanism 174 from the storage container 168 through the transfer conduit 134 into the housing 120. As the iridium source 170 enters the housing 120, it engages the microswitch lever 154 to enable the microswitch 152 and signal the presence of the iridium source by means of the indicating light 178. The iridium source 170 is maintained centrally within the housing 120 and in alignment with the reactor vessel nozzle to safe-end weld 110 by its abutment against the end of the stop member 176. Upon arrival of the iridium source 170 within the housing 120, as sensed by the microswitch 152, the film cassettes 182 are exposed for a predetermined amount of time. After the predetermined exposure time, the iridium source 170 is retracted from the housing 120 via the cable 172 through the transfer conduit 134 and back into its shielded storage within the storage container 168. The film cassettes 182 are removed from around the outer diameter of the reactor vessel nozzle to safe-end weld 110 and interpreted for detection of the presence of defects in the reactor vessel welds being inspected.

As thus far described, the inspection tool 114 of the present invention permits its insertion within an interior hollow portion of a particular reactor component being inspected, e.g., reactor vessel nozzle, is capable of displacing reactor coolant located along the radiation path between the inspection tool and that portion of the reactor vessel being inspected so as to avoid source scattering and strength diminishing, and is designed to permit the transfer of the radiation source from the inspection tool to a remote location for safe, shielded storage. As such, radiation sources which permit the radiological inspection of thick-walled, bimetal welds of a nuclear reactor may be safely used with the inspection tool 114 of the present invention. Once the radiation source has been withdrawn from the inspection tool 114 and placed into its proper storage container 168, the inspection tool may be removed from its underwater shielded environment without danger of exposing the operator to dangerous radiation, such as when not in use for repair, storage and the like. Although the inspection tool 114 of the present invention has been specifically described with respect to the radiological inspection of reactor vessel nozzle to safe-end welds 110, it is to be understood that the inspection tool is adaptable for insertion within other components of the nuclear reactor for similar types of radiological inspection. For example, the inspection tool 114 may be positioned within annular regions adjacent planar and irregular-shaped surfaces, and the like. The inclusion of the inflatable bladder 124 provides the capability of displacing reactor coolant located along the radiation path between the inspection tool and that portion of the nuclear reactor being inspected, which tool may be manipulated in an underwater radioactive environment from a remote location by attaching the tool to the B axis arm of a Westinghouse Reactive Vessel In-Service Inspection Tool.

There has thus far been described a tool for the radiological inspection of objects in an underwater environment, which tool is constructed of a housing constructed to be positioned within a hollow interior portion of the object to be inspected, a radiation source for panoramically emitting radiation along a radial radiation path between the housing and the interior portion of the object, receiving means positioned adjacent to the exterior of the object for receiving radiation from the source passing through the portion of the object, transferring means for transferring the radiation source between the housing when the housing is positioned within the hollow interior portion of the object and a remote location, an annular-shaped inflatable bladder attached to the housing for inflation between a first and secon position, the bladder permitting movement of the housing within the hollow interior portion of the object when in the first position, and displacing water within the interior portion of the object along the radial radiation path when in the second position, and control means for controlling the inflation of the bladder from the first to the second position.

Although the invention herein has been described with reference to particular embodiments, it is to be understood that these embodiments are merely illustrative of the principles and applications of the present invention. Accordingly, it is to be understood that numerous modifications may be made in the illustrative embodiments and that other arrangements may be devised without departing from the spirit and scope of the present invention as defined by the appended claims.

0170942

13

CLAIMS:

1. a tool for the radiological inspection of objects in an underwater environment in use, said tool comprising a housing, a portable radiation source for emitting radiation along a radiation path in use between said housing and said object, transfer means for transferring said radiation source between said housing and a remote location, inflatable means attached to said housing and inflatable from a first to a second position, said inflatable means permitting relative movement between said housing and said object when in said first position and displacing water located along said radiation path when in said second position, and control means for controlling the inflation of said inflatable means from said first to said second position.

2. The tool of Claim 1 further including receiving means for receiving radiation from said radiation source passing through said object being inspected.

3. The tool of Claim 1 wherein said inflatable means comprises an annular-shaped bladder.

4. The tool of Claim 1 wherein said radiation source comprises an iridium source.

5. The tool of Claim 1 wherein said transfer means comprises a conduit through which said radiation source is made to pass between said housing and said remote location.

6. The tool of Claim 5 wherein said transfer means includes a retractable cable extending through said conduit and attached to said radiation source for transferring said radiation source through said conduit between said housing and said remote location.

7. The tool of Claim 1 wherein said control means comprises a source of compressed gas.

8. The tool of claim 1 further including sensing means for sensing the presence of said radiation source within said housing.

9. The tool of Claim 1 further including positioning means for positioning said housing a predetermined distance from said object.

10. The tool of Claim 9 wherein said positioning means comprises an ultrasonic transducer.

11. The tool of Claim 1 further including alignment means within said housing for aligning the position of said radiating source within said housing.

FIG. I

FIG. 2